# EUROPÄISCHE PATENTSCHRIFT

(11) **EP 1 195 361 B1**
(45) Veröffentlichungstag und Bekanntmachung des Hinweises auf die Patenterteilung: **29.09.2004**
(21) Anmeldenummer: 00890304.9
(22) Anmeldetag: 09.10.2000
(51) Int. Cl.: C04B 7/153, C04B 7/21, C04B 7/17, C04B 7/19

(54) **Hydraulisches Bindemittel**
Hydraulic binder
Liant hydraulique

(43) Veröffentlichungstag der Anmeldung: 10.04.2002
(73) Patentinhaber: Wopfinger Stein- und Kalkwerke Schmid & Co., 2754 Waldegg (AT); Novak, Denes, Dipl-Ing., 2753 Markt Piesting (AT)
(72) Erfinder: Novak, Denes, Dipl.-Ing., 2753 Markt Piesting (DE)
(74) Vertreter: Müllner, Erwin, Dr.

(56) Entgegenhaltungen:
- WO-A-88/05425
- DE-A- 3 133 503
- DE-B- 1 217 259
- GB-A- 1 521 019
- GB-A- 2 077 251
- US-A- 5 766 297
- FORSS B: "F-CEMENT, A NEW LOW-POROSITY SLAG CEMENT" SILICATES INDUSTRIELS,BE,MONS, Bd. 3, 1983, Seiten 79-82, XP000123195
- DATABASE WPI Section Ch, Week 197920 Derwent Publications Ltd., London, GB; Class L02, AN 1979-37666B XP002162328 & JP 54 043236 A (NIPPON KOKAN KK), 5. April 1979 (1979-04-05)
- DATABASE WPI Section Ch, Week 199122 Derwent Publications Ltd., London, GB; Class L02, AN 1991-159276 XP002162329 & JP 03 093657 A (SUMIKIN KASHIMA KOK), 18. April 1991 (1991-04-18)

## Beschreibung

Die vorliegende Erfindung betrifft ein hydraulisches Bindemittel aus über 5000 cm²/g Blaine fein vermahlener, mäßig latent hydraulischer Hochofenschlacke, die Sulfatanreger und aktivierende Zusätze enthält.

Hochofenschlacke entsteht als Nebenprodukt bei der Roheisengewinnung. Im Hochofen bildet sich aus den ton-, kieselsäure- und kalkhältigen Bestandteilen der Eisenerze sowie aus Kalkstein und der Verunreinigung der Kohle bei Temperaturen von 1900°C neben der Eisenschmelze eine leichtere Schmelze, die so genannte Hochofenschlacke. Diese Schlacke wird bei 1400°C mit Wasser abgekühlt. Durch diese rasche Abkühlung entsteht ein hochglasiges Granulat, das latent hydraulische Bindekräfte besitzt. Daher kommt die glasige Hochofenschlacke als selbstständiges Bindemittel nicht in Betracht. Ihre Erhärtungsenergie kann aber durch Zugabe von Erregern aktiviert werden. Für diese Aktivierung gibt es grundsätzlich zwei Möglichkeiten: die Zugabe von Kalkhydrat oder Zement (alkalische Aktivierung) und die Zugabe von Kalciumsulfat (sulfatische Aktivierung). Allerdings ist nicht jede Schlacke gleich aktivierbar.

Die Beurteilung der latent hydraulischen Bindekraft der Schlacke erfolgt nach der Zusammensetzung der Schlacke. So beurteilt Dr. Fritz Keil in "Zement, Herstellung und Eigenschaften", Springer-Verlag, Berlin 1971 auf S. 116, die Qualität der Schlacke nach dem Verhältnis (CaO+CaS+0,5MgO+Al₂O₃)/(SiO₂+MnO) (F-Wert). Liegt der F-Wert über 1,9, gilt die Schlacke als sehr gut, unter 1,5 als mäßig hydraulisch. Ein weiteres Beurteilungskriterium für die Schlackenaktivität ist der SiO₂-Gehalt. So gelten Schlacken mit weniger als 32% im Allgemeinen als hochhydraulisch, mit mehr als 37% als wenig hydraulisch.

Bezüglich der alkalischen Aktivierung wird nach EN 197-1 bei der Zementherstellung für die Schlackenqualität folgende Forderung gestellt: das Verhältnis (CaO+MgO)/SiO₂ muss größer als 1,0 sein.

Für die sulfatische Aktivierung eignen sich laut Literatur Schlacken, die mindestens 13% Al₂O₃-Gehalt aufweisen und das Verhältnis (CaO+MgO+Al₂O₃)/SiO₂ über 1,6 liegt. Mehrere Patente verlangen eine CaO-Gehalt über 40% und einen Al₂O₃-Gehalt über 14% (siehe z.B. die CA-PS 1 131 664).

In der CA-PS 1 131 664 ist ein Bindemittel beschrieben, das folgende Zusammensetzung aufweist:
- 80-85%: granulierte Hochofenschlacke (mit 40-50% CaO
14-20% Al₂O₃
30-35% SiO₂
5-8% MgO),
- 13-17%: CaSO₄(gerechnet als Anhydrit),
- 1,5-2,5%: Portlandzement,
- 0,1-0,5%: einer organischen Carboxylsäure oder deren Salze,
- 0,03-0,6%: Methylcellulose, Na-stearat oder Na-laurylbenzolsulfonat und
- 0,6-2%: Natriumsulfat.

In Übereinstimmung mit dem oben Gesagten wird hochhydraulische Schlacke eingesetzt. Zur Verbesserung wird sogar empfohlen, Al₂O₃ und CaO der Schlacke zuzusetzen und dieses Gemisch zu erhitzen.

Auf Grund der oben angeführten Kriterien ist leider der Großteil der anfallenden Hochofenschlacke als mäßig hydraulisch zu beurteilen. Diese minderwertigeren Hochofenschlacken können in der Zementindustrie als Zumahlstoffe erfahrungsgemäß bis zu maximal 65% des Zementgehaltes eingesetzt werden, da darüber hinaus die Festigkeiten rapide sinken. Auch die Betonindustrie kann diese Schlacke nur begrenzt als Zusatzstoffe verwenden.

Es ist Aufgabe der vorliegenden Erfindung, ein Bindemittel der eingangs genannten Art zu schaffen, bei dem minderwertige Schlacken zum Einsatz kommen und das dennoch ein hochwertiges Produkt ergibt.

Diese Aufgabe wird durch ein Bindemittel der eingangs genannten Art erfindungsgemäß dadurch gelöst, dass die mäßig latent hydraulische Hochofenschlacke folgende Analysenwerte aufweist:
Glasigkeit: >93%
SiO₂: 34-40%
CaO: 34-37%
Al₂O₃: >9%
(CaO+_{M}gO)/(Al₂O₃+SiO₂):0,88-0,98

Überraschender Weise wurde gefunden, dass Schlacken, die diese Parameter erfüllen, gute Produkte ergeben, selbst dann, wenn sie nach den üblichen Kriterien als mäßig hydraulisch einzustufen sind. Es können Schlacken mit weniger als 13% Al₂O₃ eingesetzt werden. Es kann der F-Wert unter 1,5 liegen und das Verhältnis (CaO+MgO+Al₂O₃)/SiO₂ unter 1,6 liegen.

Eine Schlacke wird nur selten zufällig alle erfindungsgemäß geforderten Eigenschaften aufweisen. Da es aber sehr viele minderwertige Schlacken gibt, ist es oft möglich, durch ein Gemisch aus mindestens zwei Hochofenschlacken alle geforderten Eigenschaften zu erreichen. Dies hat den zusätzlichen Vorteil, dass der Aktivierungsgrad viel höher wird, wenn die obigen Voraussetzungen durch Mischung von Schlacken unterschiedlicher Herkunft erreicht werden.

Die Aktivierung der Schlacke erfolgt durch Zumischung oder Zumahlung von natürlichem Gips, Rauchgasentschwefelungsgips (REA-Gips) oder Anhydrit von 12-20%, Portlandzement von 0,5-5% und/oder anderen CaO-Trägern wie Heißmehl, Branntkalk oder Ca(OH)₂ von 0,5-3%, Alkalisulfaten oder -carbonaten von 0-3% und/oder Ca-Salzen von Carboxylsäuren von 0,5-3%. Vorteilhaft hat sich der Einsatz von Heißmehl gezeigt, wodurch die Hydratation der Schlacke beschleunigt wird und die Druckfestigkeiten erhöht werden.

Heißmehl ist ein 70-90% entsäuertes Rohmehl, das in der untersten Zyklonstufe des Wärmetauscherofens bei 800-900°C bei der Erzeugung von Portlandzementklinker entsteht. Das Mehl wird mittels Bypass von dem Ofensystem entnommen. Es enthält überwiegend CaO.

Die aus diesem Bindemittel hergestellten Prismen zeigen hohen Widerstand gegen Sulfatangriff und ergeben Festigkeiten, die den Festigkeitsklassen der ÖNORM B3310 und den EN 197-1 entsprechen und dem normalen Portlandzement vergleichbar sind oder diese sogar übertreffen.

Anhand eines Beispiels wird die vorliegende Erfindung erläutert. Es wird ein Bindemittel aus folgenden Bestandteilen hergestellt:
85% Schlacke (Blainewert 5800 cm²/g)
13% REA-Gips
1% Portlandzement
0,5% Heißmehl
0,5% Kalciumacetat

Als Schlacke wird einmal eine erfindungsgemäße Schlacke und einmal eine andere Schlacke (Vergleichsversuch) verwendet. Die Daten der Schlacken und die sich ergebenden Festigkeiten sind in der folgenden Tabelle angegeben:

| **Analyse** | **Schlackenmischung gut geeignet** | | **Schlackenmischung nicht geeignet** | |
|---|---|---|---|---|
| Glasigkeit | 94 | | 94 | |
| SiO2 % | 38,3 | | 37,3 | |
| A1203 % | 11,2 | | 10,0 | |
| CaO % | 35,8 | | 38,2 | |
| MgO % | 9 | | 10,5 | |
| (CaO+MgO)/(Al2O3+SiO2) | 0,91 | | 1,03 | |

| | **ÖN B3310** | **EN 196-1** | **ÖN B 3310** | **EN 196-1** |
|---|---|---|---|---|
| **Druckfestigkeiten N/mm2** | | | | |
| nach 2 Tagen | | 7 | | 9 |
| nach 3 Tagen | 10 | | 11 | |
| nach 7 Tagen | 26 | 30 | 15 | 18 |
| nach 28 Tagen | 46 | 49 | 22 | 24 |

Die Festigkeiten können zusätzlich mit Betonadditiven (wie Verflüssigern zur Herabsetzung des Wasser/Bindemittel-Wertes von 0,6 auf 0,30) noch wesentlich gesteigert werden.

Das erfindungsgemäße Bindemittel zeichnet sich besonders durch die sehr niedrige Hydrationswärme aus. Es ist für die Herstellung von Kläranlagen, Kanalrohren, Becken, Auffangwannen und Bauobjekten, die dem Sulfatangriff ausgesetzt sind, hervorragend geeignet.

## Patentansprüche

1. Hydraulisches Bindemittel aus über 5000 cm²/g Blaine fein vermahlener, mäßig latent hydraulischer Hochofenschlacke, die Sulfatanreger und aktivierende Zusätze enthält, **dadurch gekennzeichnet, dass** die mäßig latent hydraulische Hochofenschlacke folgende Analysenwerte aufweist:
| | |
|---|---|
| Glasigkeit | >93% |
| SiO₂ | 34-40% |
| CaO | 34-37% |
| Al₂O₃ | >9% |
| (Cao+MgO)/(Al₂O₃+SiO₂) | 0,88-0,98 |

2. Bindemittel nach Anspruch 1, **dadurch gekennzeichnet, dass** der Anteil an Al₂O₃ in der Hochofenschlacke höchstens 13% beträgt.

3. Bindemittel nach Anspruch 1 oder 2, **dadurch gekennzeichnet, dass** die Hochofenschlacke durch ein Gemisch von mindestens zwei Hochofenschlacken gebildet ist.

4. Bindemittel nach einem der Ansprüche 1 bis 3, **dadurch gekennzeichnet, dass** die mäßig hydraulische Schlacke eine Feinheit von 5000-6500 cm²/g Blaine aufweist.

5. Bindemittel nach einem der Ansprüche 1-4, **dadurch gekennzeichnet, dass** es 0,5-5% Anteil Portlandzementklinker bzw. Portlandzement enthält.

6. Bindemittel nach einem der Ansprüche 1 bis 5, **dadurch gekennzeichnet, dass** es als Sulfatträger 12-20% Abfallgips der Rauchgasentschwefelung oder Halbhydrat oder Anhydrit oder Naturgips oder Gemische dieser Sulfatträger enthält.

7. Bindemittel nach einem der Ansprüche 1 bis 6, **dadurch gekennzeichnet, dass** es 0,5-3% Heißmehl oder Kalkhydrat oder Branntkalk enthält.

8. Bindemittel nach einem der Ansprüche 1 bis 7, **dadurch gekennzeichnet, dass** es bis zu 3% Alkalisulfate und/oder -carbonate enthält, insbesondere K₂SO₄, Na₂SO₄, Na₂CO₃, LiCO₃ oder K₂CO₃.

9. Bindemittel nach einem der Ansprüche 1 bis 8, **dadurch gekennzeichnet, dass** es 0,5-3% Kalciumsalz einer Carboxylsäure, insbesondere Kalciumacetat und/oder Kalciumformiat enthält.

## Claims

1. Hydraulic binder comprising moderately latently hydraulic blast furnace slag which has been finely ground to over 5000 cm²/g Blaine and contains sulphate accelerator and activating additives, **characterized in that** the moderately latently hydraulic blast furnace slag has the following analytical values:
| | |
|---|---|
| Degree of vitrification | > 93% |
| SiO₂ | 34-40% |
| CaO | 34-37% |
| Al₂O₃ | > 9% |
| (CaO+MgO) / (Al₂O₃+SiO₂) | 0.88-0.98 |

2. Binder according to Claim 1, **characterized in that** the proportion of Al₂O₃ in the blast furnace slag is not more than 13%.

3. Binder according to Claim 1 or 2, **characterized in that** the blast furnace slag is formed by a mixture of at least two blast furnace slags.

4. Binder according to any of Claims 1 to 3, **characterized in that** the moderately hydraulic slag has a fineness of 5000-6500 cm²/g Blaine.

5. Binder according to any of Claims 1-4, **characterized in that** it contains 0.5-5% of Portland cement clinker or Portland cement.

6. Binder according to any of Claims 1 to 5, **characterized in that** it contains, as a sulphate carrier, 12-20% of waste gypsum from flue gas desulphurization or hemihydrate and anhydrite or natural gypsum or mixtures of these sulphate carriers.

7. Binder according to any of Claims 1 to 6, **characterized in that** it contains 0.5-3% of hot meal or slaked lime or quicklime.

8. Binder according to any of Claims 1 to 7, **characterized in that** it contains up to 3% of alkali metal sulphates and/or carbonates, in particular K₂SO₄, Na₂SO₄, Na₂CO₃, LiCO₃ or K₂CO₃.

9. Binder according to any of Claims 1 to 8, **characterized in that** it contains 0.5-3% of a calcium salt of a carboxylic acid, in particular calcium acetate and/or calcium formate.

## Revendications

1. Liant hydraulique constitué de plus de 5000 cm²/g Blaine de laitier de haut fourneau modérément hydraulique latent, finement broyé, qui contient un activateur sulfate et des additifs activants, **caractérisé en ce que** le laitier de haut fourneau modérément hydraulique latent présente les valeurs d'analyse suivantes :
| | |
|---|---|
| Vitrification | >93% |
| SiO₂ | 34-40% |
| CaO | 34-37% |
| Al₂O₃ | >9%- |
| (CaO+MgO)/(Al₂O₃+SiO₂) | 0,88-0,98 |

2. Liant selon la revendication 1, **caractérisé en ce que** la quantité de Al₂O₃ s'élève à 13% au maximum dans le laitier de haut fourneau.

3. Liant selon la revendication 1 ou 2, **caractérisé en ce que** le laitier de haut fourneau est formé par un mélange d'au moins deux laitiers de haut fourneau.

4. Liant selon l'une quelconque des revendications 1 à 3, **caractérisé en ce que** le laitier modérément hydraulique présente une finesse de 5000-6500 cm²/g Blaine.

5. Liant selon l'une quelconque des revendications 1 à 4, **caractérisé en ce qu'**il contient une quantité de 0,5-5% de clinker de ciment Portland ou de ciment Portland.

6. Liant selon l'une quelconque des revendications 1 à 5, **caractérisé en ce qu'**il contient comme support de sulfate, 12-20% de plâtre résiduaire de la désulfuration des gaz de fumée ou l'hémihydrate ou l'anhydrite ou le plâtre naturel ou des mélanges de ces supports de sulfate.

7. Liant selon l'une quelconque des revendications 1 à 6, **caractérisé en ce qu'**il contient 0,5-3% de fines chaudes, de chaux grasse ou de chaux vive.

8. Liant selon l'une quelconque des revendications 1 à 7, **caractérisé en ce qu'**il contient jusqu'à 3% de sulfate et/ou de carbonate alcalins, en particulier K₂SO₄, Na₂SO₄, Na₂CO₃, LiCO₃ ou K₂CO₃.

9. Liant selon l'une quelconque des revendications 1 à 8, **caractérisé en ce qu'**il contient 0,5-3% de sel de calcium d'un acide carboxylique, en particulier l'acétate de calcium et/ou le formiate de calcium.
